# EUROPEAN PATENT APPLICATION

(11) **EP 1 213 639 A1**
(43) Date of publication of application: **12.06.2002**
(21) Application number: 01115688.2
(22) Date of filing: 05.07.2001
(51) Int. Cl.: G06F 1/16

(54) **Wearable computer system**

(30) Priority: 08.12.2000 US 732814
(71) Applicant: Xybernaut Corporation, Fairfax, Virginia 22033 (US)
(72) Inventor: Heyman, Martin D., Orinda, CA 94563 (US)
(74) Representative: Borchert, Uwe Rudolf, Dipl.-Ing.

(57) **Abstract**

This invention is used in wearable speech-activated computers. This invention uses a digital signal processor (DSP) for front end processing of incoming speech commands and transports the resulting digital data to a main processor. This transport or transfer is accomplished via a wireless transfer system.

## Description

This invention relates to a wearable computer system according to the features of claim 1.

This invention relates to a computer display and, more specifically, to a display used with a voice-activated, user-supported computer.

There are two basic Xybernaut Corporation U.S. patents relating to user-supported computers. The first is U.S. Patent 5,305,244 and the second is U.S. Patent 5,844,824.

U.S. Patent 5,305,244 owned by the same entity as the present invention, discloses a voice-activated, user-supported computer - mobile computer -. In the system of U.S. Patent 5,305,244, a lightweight, self-contained, portable computer is defined which is completely supported by a user for hands-free retrieval and display of information. This compact computing apparatus comprises a computer housing having means to secure the housing to a user and storage means mounted in the housing for storing previously entered information including a pre-programmed vocabulary model of words and phrases. Also included in U.S. Patent 5,305,244 is a description of further components such as processor means for receiving, retrieving and processing information and user audio commands in accordance with a stored program and audio transducer and converter means in communication with the processor means for receiving and converting the received audio commands into electrical signals and sending these converted signals to the processor means. The processor means will thereby recognize a command, match these commands against a defined subset of a pre-programmed vocabulary and transmit this to a computer display means. The display means can be mounted adjacent the user's eyes to provide the user complete hands-free use of the portable computer. Any type of display, however, could be used in U.S. Patent 5,305,244 including neck-hung or flat panel displays. The computer components and their function are fully described in this U.S. Patent 5,305,244. For the sake of clarity, each of the components of the apparatus of U.S. Patent 5,305,244 will not be described in detail herein since they are now known as per the invention described in U.S. Patent 5,305,244. This U.S. Patent 5,305,244 will be designated throughout this disclosure as Newman et al I.

U.S. Patent 5,844,824 (Newman et al II), also owned by Xybernaut Corporation, discloses a hands-free, portable computer system similar to that in U.S. Patent 5,305,244. However, various activation means other than voice activation are disclosed. The invention disclosed in Newman et al II is directed to a compact, portable computing apparatus at least part of which is completely supported by a user for hands-free retrieval and display of information for the user. The computing apparatus includes a housing which may or may not have securing means for removably securing the housing to a user for support by the user. Alternatively, the housing may be located in a remote location not attached to the user and apart from the other components. The housing further includes storage means for storing previously entered information, and processor means, communicating with the storage means, for receiving, retrieving, and processing information and user commands in accordance with a stored program. Since large databases of ETMs and IETMs will be accessed by the mobile self-contained computing apparatus, a means of easily interfacing storage means containing the databases is required. The housing of the computing apparatus includes an access port whereby various storage means containing data can be interfaced and communication established. Access and transfer of data between the storage means and the computing apparatus can be accomplished entirely under control of various hands-free activation means described in this application. The access port allows direct electrical attachment of the storage means; however, other wired and wireless connections are also used. The computing apparatus also includes eye tracking, brain actuation means, transducer and converter means with or without audio transducer and converter means in communication with the processor means, for receiving commands from the user, for converting the received commands into electrical signals, for recognizing the converted electrical signals and for sending the recognized electrical signals to the processor means. The transducer and converter means may or may not be supported by the user. The computing apparatus further includes display means in communication with the processor means for receiving information from the processor means and for displaying the received information for the user, the display means being supported by the user whereby the user may operate the computing apparatus to display information in a hands-free manner utilizing only brain activation or eye tracking with or without audio commands.

The disclosures of U.S. Patents 5,305,244 and 5,844,824 are incorporated by reference into the present disclosure.

A current method of processing speech in the environment of wearable computers is primarily a software-based method. The sound card is used as an audio input and contains an analog to digital (A/D) converter that takes the sounds/words picked up by a standard analog microphone and converts them to a digital bit stream to pass on to the microprocessor. Then software, which is stored in memory, is used in tandem with the CPU to process the signal representation of the voice, whether command or just text, and to execute the appropriate command or function. The leading software applications for this kind of interaction are IBM Corporation's Via-Voice ® and Dragon Systems Corporation's Naturally Speaking ®. These are both speech recognition programs with speech recognition software engines that utilize the CPU of the computer for all processing of speech. This task is very calculation intensive of the CPU and significantly ties up and limits the system resources. In desktop or laptop environments, running off of AC power, this merely causes a degradation of system performance. However, in mobile and wearable environments where power is usually supplied by batteries, it also causes an excess consumption of power. There is a direct correlation between clock cycles performed by the CPU and power consumption. Additionally, in these mobile/wearable environments where space is also limited and little or no active cooling is employed, excess heat generation can cause degradation to memory, motherboard and other silicon-based electronic components and can also cause a degradation in CPU speed to accommodate the heat build up. Thus, an architecture which extends the usable battery life and reduces heat build-up by the CPU while efficiently and effectively processing speech would be a significant advancement over the state-of-the-art.

It is known to use a digital signal processor (hereinafter DSP) chip for processing of natural speech. An example of this is customer service phone systems whereby callers can speak their input as well as key it in on the keypad integral to their telephones. The DSP is integrated into the phone tree system. When the system receives a signal representative of a spoken word, the DSP performs a matching against known signals representative of known words and effects and input of this data. These systems, however, are generally limited to numeric recognition and are not available in consumer-oriented products.

A DSP is essentially a general purpose microprocessor which can be applied to various specific use applications. It includes special logic hardware for executing mathematical functions at speeds, power consumption levels, and efficiencies not usually associated with microprocessors. These chips can be programmed to perform various signal processing functions.

Prior art such as U.S. Patents 5,794,068 and 5,915,236 disclose the use of DSP to process speech. Usually, the DSP of the prior art is able to perform the DSP function in parallel with other operations performed by the general purpose CPU. If a program detects both a CPU and a DSP processor, it can cause the DSP to determine when the program should interrupt the CPU. The problem here is that an extra step is needed to utilize the DSP feature.

Also, a co-pending application, Serial No. 09/677,569, discloses and claims a novel motherboard architecture with integrated digital signal processing with DSP capability. The motherboard of 09/677,569 can be used in the system of the present invention.

It is therefore an object of this invention to provide a user-supported computer system devoid of the above-noted disadvantages.

Another object of this invention is to provide a voice-activated, user-supported computer system where the audio portion can be fully processed in the head-mounted display (HMD).

Still a further object of this invention is to provide a voice-activated, user-supported computer system which has separate software for the Digital Signal Processor (DSP).

Yet another object of this invention is to provide a voice-activated mobile computer system where the CPU and DSP interact continuously and synchronize transmission of data.

Another still further object of this invention is to provide a voice-activated mobile computer system where the DSP condenses whatever data is sent to the CPU of the main computer.

Another yet further object of this invention is to provide a faster means to process speech or voice in a voice-activated mobile computer system.

These and other objects are accomplished, generally speaking, by a voice recognition and processing module or mechanism by which speech is fully processed in the headset of the system and transmitted under control of a wireless connected computer.

There are some disadvantages or drawbacks to some presently used, voice-activated mobile computers. These include a multitude of necessary cables or wires, slowness of speech processing, some inaccuracy and limited capability in speech-based processing methods, excess power consumption and significant heat generated by the CPU of the computer.

To improve on all of these disadvantages, the present invention provides a mechanism by which speech is fully processed in the headset and transmitted under control or in concert with instructions from a wireless connected computer. Less heat is generated which is extremely important in a wearable computer. Speech is processed faster by condensing what data is sent and significantly less power is consumed for the same amount of information transmitted. Connecting the headset (or other user-supported monitor as earlier noted) via wireless communications can significantly reduce the wires previously required. In this invention, the headset makes itself available (through an appropriate protocol) for a device or a computer to request establishment of a session, to send various commands for processing on the headset, to receive results from those commands and to terminate the session. The protocol defines mechanisms to ensure both the device and the headset remain in communication. The protocol also provides for transmission of specialized software from the "host" device that the headset uses in its on-board general purpose processor or its PSP. The two independent units software would interact, agree on data formats and synchronize transmissions. The headset could use the on-board sub-system to conversationally control headset functions. The headset could also be used in turning the link on or off, controlling microphone or earphone volume (gain) levels, controlling signal processing such as equalizers or noise reductions, on utilizing the microphone while allowing the earphones to remain active. This local control would provide powerful hands-free control over the user's audio experience.

The headsets' on-board speech recognition capabilities could be used with or as an alternative to the headset control functions. The controlling computer or other device would request the headphone's speech subsystem to perform full on-board recognition as to pre-process the microphone's audio signal to simplify recognition on the connected machine or some other processor logically connected via networking.

The term "processor" when used throughout including the claims means only the processor in the computer and not the processor of the DSP.

The terms "headset" or "head-mounted display" will be used throughout this disclosure and it is understood that these terms include flat panel displays, neck hung displays, wrist-mounted displays or any other suitable display.

"Voice" activation includes any suitable type of audio activation. "Normal display means" functions include all of the display functions disclosed in U.S. Patents 5,305,244 and 5,844,824.

The preferred and optimumly preferred embodiments of the present invention have been described herein and shown in the accompanying drawings to illustrate the underlying principles of the invention but it is to be understood that numerous modifications and ramifications may be made without departing from the spirit and scope of this invention.

## Claims

1. A wearable computer system, which is voice-activated, comprising in combination a computer housing, a processor in said housing, means for receiving recognizing and processing audio commands and converting said commands into electrical signals and display means in communication with said processor for receiving information and displaying the received information, said display means in wireless electrical connection to said processor and wherein said display means comprises a digital signal processor (DSP), which has means to control data and/or information wirelessly communicated to said processor, and wherein said DSP in said display means performs only front end processing of incoming speech commands and transports via wireless transfer resulting digital data to said processor in said housing.

2. A wearable computer system according to claim 1, **characterized by** a configuration for user supporting.

3. A wearable computer system according to claim 1 or 2, **characterized in that** said processor and said display means each have means to receive and process verbal commands and convert said commands to electrical signals.

4. A wearable computer system according to any one of the preceding claims, **characterized in that** said display means has a speech subsystem that can perform and simplify on-board recognition of audio signals.

5. A wearable computer system according to any one of the preceding claims, **characterized in that** both said processor and display means operate under the use of the same software.

6. A wearable computer system according to claim 1 to 4, **characterized in that** said processor and said display means operate under the use of separate software.

7. A wearable computer system according to any one of the preceding claims, **characterized in that** said display means speech recognition capabilities are used with or as an alternative to normal display means functions.

8. A wearable computer system according to any one of the preceding claims, **characterized in that** speech is fully processed in said display and transmitted to a wireless connected computer in said computer housing.

9. A wearable computer system according to any one of the preceding claims, **characterized in that** said display includes an appropriate protocol to send various commands, to receive various commands, to receive and display results of said commands and has means to terminate any communication with said processor.

10. A wearable computer system according to any one of the preceding claims, **characterized in that** said display means is selected from the group consisting of head-mounted displays, neck-hung displays, flat panel displays, wrist-mounted displays and mixtures thereof.
